# EUROPEAN PATENT APPLICATION

(11) **EP 4 759 445 A1**
(43) Date of publication of application: **17.06.2026**
(21) Application number: 25222325.0
(22) Date of filing: 10.12.2025
(51) Int. Cl.: B08B 1/34, B08B 5/02, B08B 5/04

(54) **MACHINING CENTER WITH MOBILE CLEANING UNIT, AND METHOD FOR CLEANING A WORKPIECE**

(30) Priority: 13.12.2024 IT 202400028356
(71) Applicant: SCM Group S.p.A., 47921 Rimini (RN) (IT)
(72) Inventor: SEBASTIANI, Giovanni, 47921 RIMINI (RN) (IT); GIGLIOTTI, Fabrizio, 47921 RIMINI (RN) (IT)
(74) Representative: Tiburzi, Andrea

(57) **Abstract**

The present invention relates to a machining center (1), for the machining of workpieces (P), such as panels made of wood, fiberglass, plywood, plastic, and similar materials, comprising: a worktable (2), on which said panels (P) can be placed for machining; a portal (3) movable with respect to said worktable (2) in an advancement direction (A) for machining the workpiece (P); a machining unit (31) fixed to said portal (3), for machining said panels (P) placed on said worktable (2); and a cleaning assembly (4) integrated with said portal (3), so as to be moved together with said portal (2).

The present invention also relates to a method for machining and cleaning a workpiece (P).

## Description

The present invention relates to a machining center with mobile cleaning unit, and method for cleaning a workpiece thereof.

### Field of invention

More specifically, the invention relates to a machining center for machining panels, such as panels made of wood, fiberglass, plywood, plastic and the like, a method and a computer program for machining panels with a mobile cleaning unit integral with a portal.

In the following, the description will focus on the machining of wooden panels, but it is clear that it should not be considered limited to this specific use.

### Prior art

Panel machining centers are widely used in the wood and composite materials industries to perform various machining operations such as milling, drilling, and cutting. These machining centers typically comprise a worktable on which the panels to be machined are positioned, a mobile portal that moves along the worktable, and a machining head mounted on the portal to perform the required operations on the panels.

During machining operations, chips and shavings are produced that accumulate on the panel surface and the work surface. These residues can interfere with subsequent processing steps, compromising the precision and quality of the final result.

Furthermore, the accumulation of waste can cause safety and hygiene problems in the workplace.

The cleaning systems currently used in machining centers have some limitations. They often consist of fixed devices positioned on the sides of the work surface, which cannot effectively reach all machining areas.

In other cases, they require manual intervention by the operator to remove waste after each machining cycle slowing down productivity.

Based on the above, there is a need in the industry for an integrated and mobile cleaning system that overcomes the problems of the prior art.

### Purpose of the invention

In light of the above, it is, therefore, the object of the present invention to provide a machining center with a mobile cleaning unit capable of effectively removing machining waste during operations.

Another aim of the invention is to combine different cleaning functions in a single unit.

It is also the aim of the present invention to integrate the cleaning unit into the work centre, protecting it from any damage and optimizing the operating space of the work center itself.

### Object of the invention

It is therefore specific object of the present invention a machining center, for the machining of workpieces, such as panels made of wood, fiberglass, plywood, plastic, and similar materials, comprising: a worktable, on which said panels can be placed for machining; a portal movable with respect to said worktable in an advancement direction for machining the workpiece; a machining unit fixed to said portal, for machining said panels placed on said worktable; and a cleaning assembly integrated with said portal, so as to be moved together with said portal.

Always according to the invention, said portal may comprise a housing, located behind said machining unit in the advancement direction of said portal, and said cleaning assembly may be arranged in said housing.

Still according to the invention, said cleaning assembly may comprise: a transverse frame having a longitudinal housing; a brush driven by a motor to remove machining scraps from the panel; one or more nozzles for emitting an air jet onto said machining scraps; and at least one suction hood to draw said machining scraps.

Advantageously according to the invention, said brush may be configured to rotate around an axis (R), substantially parallel to said worktable and transverse to said advancement direction.

Further according to the invention, said one or more nozzles may be configured to emit said air jet in a direction substantially perpendicular to said worktable.

Preferably according to the invention, said at least one suction hood may comprise a plurality of openings arranged along a direction substantially parallel to said worktable.

Advantageously according to the invention, said cleaning assembly may comprise one or more ducts, each connected to a respective suction hood for collecting machining scraps.

Always according to the invention, said cleaning assembly may comprise a scraper assembly, having a detection unit installed on said transverse frame, wherein said detection unit comprises a rod, installed on said frame, configured to rotate about a rotation axis, a plurality of teeth arranged in series and coupled to said rod, adapted to detect debris or chips on the surface of said workpiece, a detection sensor, and at least one connecting arm that connects said rod with said detection sensor, wherein, when said teeth intercept debris or chips on the surface of said workpiece, they cause the rotation of said rod so that said arm actuates said detection sensor.

Still according to the invention, said scraper assembly may comprise a first scraper, preferably made of rubber, and a second scraper, preferably made of rubber, wherein said first and second scrapers are positioned so that said brush and said nozzles are arranged between them.

Further according to the invention, said machining center may comprise a logical control unit configured to coordinate the movement of said portal with the activation of said cleaning assembly.

Advantageously according to the invention, said control unit may be configured to activate said cleaning assembly during the movement of said portal.

It is further object of the present invention a method for machining and cleaning a workpiece, comprising: placing a workpiece to be machined on a worktable of a machining center according to any one of the preceding claims; moving the portal along the worktable until positioning the machining head in correspondence with a portion of the workpiece to be machined; performing the machining on the portion of the workpiece using said machining head; and activating the cleaning assembly integrated with the portal to remove the machining scraps generated.

Always according to the invention, the activation step of the cleaning assembly may comprise: actuating the brush to mechanically remove machining scraps; emitting an air jet from the one or more nozzles to displace machining scraps; and aspirating the machining scraps using said at least one suction hood.

Still according to the invention, said method may comprise the step of: coordinating, via a control unit, the movement of said portal with the activation of the cleaning assembly.

Advantageously according to the invention, the activation step of the cleaning assembly may occur during the movement of the portal along the worktable.

### Brief description of the figures

The present invention will be now described, for illustrative but not limitative purposes, according to its preferred embodiments, with particular reference to the figures of the enclosed drawings, wherein:
figure 1 illustrates a perspective view of a machining center, according to aspects of the present invention;
figure 2 illustrates the machining center of figure 1 in which a housing of a cleaning assembly is visible open;
figure 3 illustrates a top view of the machining center of figure 1;
figure 4 illustrates a first perspective view of a cleaning assembly according to the present invention;
figure 5 illustrates a second perspective view of the cleaning assembly according to figure 4;
figure 6 shows a front view of a component of the machining center according to the present invention;
figure 7 illustrates an exploded view of a cleaning assembly for a machining center, according to the present invention; and
figure 8 presents a cross-sectional view of components of the cleaning assembly, according to the present invention.

### Detailed description

The present invention relates to a machining center for machining panels. Specifically, the invention concerns a machining center that may comprise a worktable, a mobile gantry, a machining head, and a cleaning unit integral with the portal.

The machining center can be configured to perform machining operations on panels positioned on the worktable. The portal can be moved along the worktable in one direction.

The machining head can be slidingly fixed to the portal and configured to perform machining operations on the panels.

In some respects, the cleaning assembly can be attached to the portal so that it moves together with it.

The cleaning unit can include various elements for removing machining waste, such as a motorized brush, nozzles for emitting air jets and extraction hoods.

This configuration can allow for effective and continuous cleaning of the work area during machining operations. In some cases, this can improve the quality of the final result and reduce machine downtime for manual cleaning.

The invention also relates to a method for machining and cleaning a workpiece or panel using a machining center, as well as a computer program and a storage medium for implementing this method.

The embodiments described below are intended as examples and are not limited to them. Variations and modifications to the embodiments described may be made without departing from the scope of this invention.

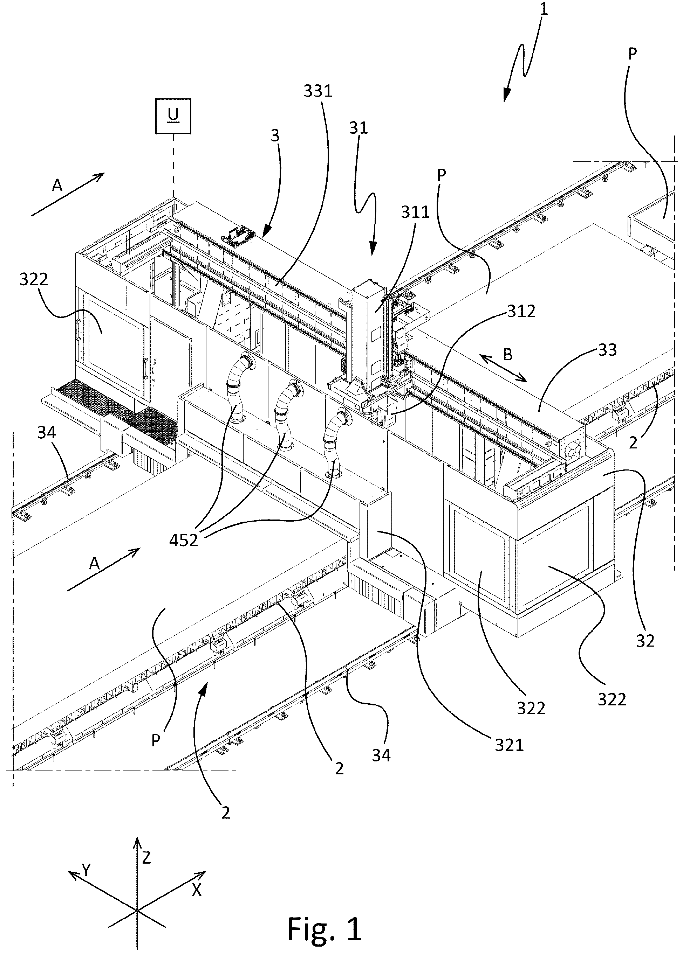

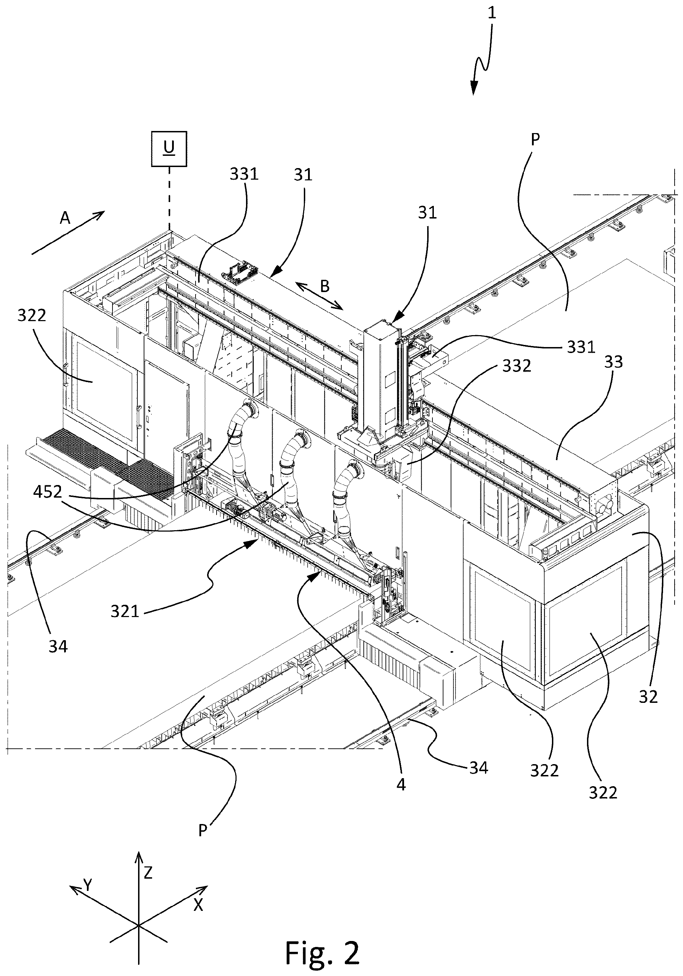

Referring to figures 1, 2 and 3, an isometric view of a machining center 1 is illustrated.

The machining center 1 mainly comprises a worktable 2, a portal 3, a cleaning assembly 4 and a central control unit U for the operation, activation, control and coordination of the various parts of the machining center 1.

The worktable 2 may be of various types. For example, it may be a bar table with fixed or movable suction cups. In other embodiments, the worktable may include systems for creating a vacuum and holding the panel P in place. Still in other embodiments, the worktable 2 may include clamps for securing the workpiece or panel P.

In general, the worktable 2 has the purpose of supporting and holding in position the piece or panel P to be machined.

The portal 3 is movable with respect to the worktable 2 along an advancement direction A, which coincides with the X axis of the Cartesian axes XYZ shown in the figures.

The portal 3 of the machining center 1 comprises a machining unit 31, a crosspiece 33 and a protective frame 32.

The crosspiece 33 is arranged above the worktable 2, oriented transversally to the movement of the same, i.e. in the Y direction, always with respect to the set of three XYZ axes.

The crosspiece 33 extends across the entire width of the machining center 1. This configuration can allow the machining unit 31 to move along multiple axes, to perform different machining operations.

The crosspiece 33 is movably coupled to two tracks 34, installed on the ground. If necessary, the crosspiece 33 can also be moved with respect to the worktable 2 using other means or systems.

The movement of the portal 3 is coordinated by the logic control unit U, also with respect to the activation and operation of the machining unit 31.

A guide 331 is arranged on the crosspiece 33, also oriented in the direction of the Y axis, on which the machining unit 31 is slidably coupled.

In one embodiment, the machining unit 31 comprises a body 311, slidably coupled to the guide 331, and a machining head 312, on which tools are installed for machining the workpiece or panel P. In some embodiments, the machining head 312 may have two or three rotation axes, so that overall, the tool can be oriented according to five or six degrees of freedom.

The protective frame 32 of the portal 3 has windows 322 to allow a potential user to visually verify the correct functioning of the machining head 312.

The protective frame 32 also has a housing 321, arranged on the protective frame 32. In particular, in the present embodiment, the housing 321 is arranged in the protective frame 32 on the side opposite to that in which the machining unit 31 is arranged or coupled. In said housing 321 a cleaning unit 4 is arranged, the operation of which will be better explained below.

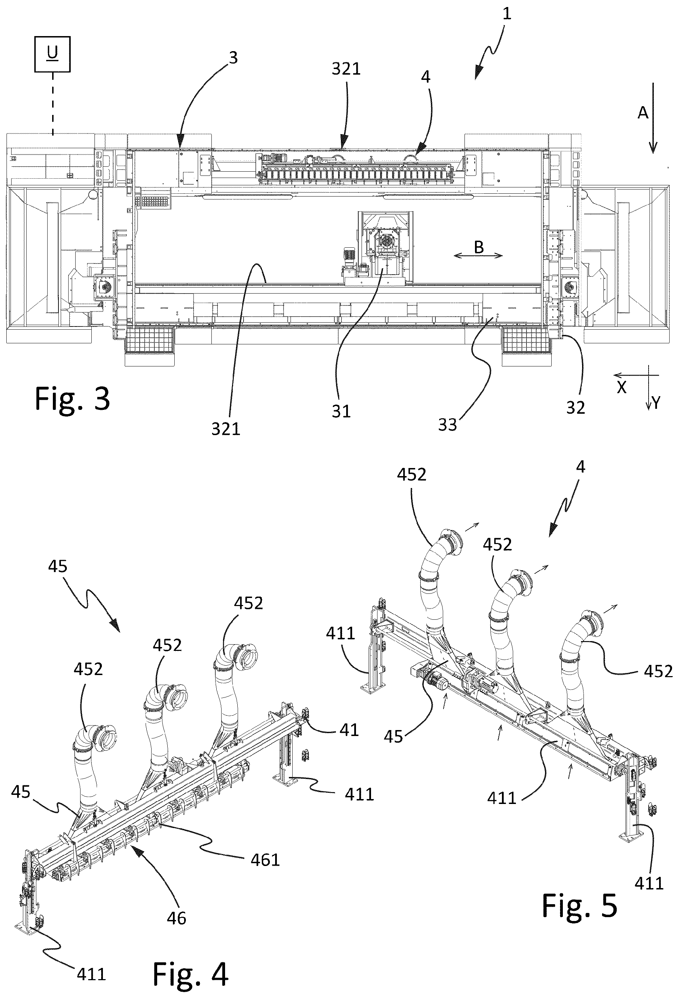

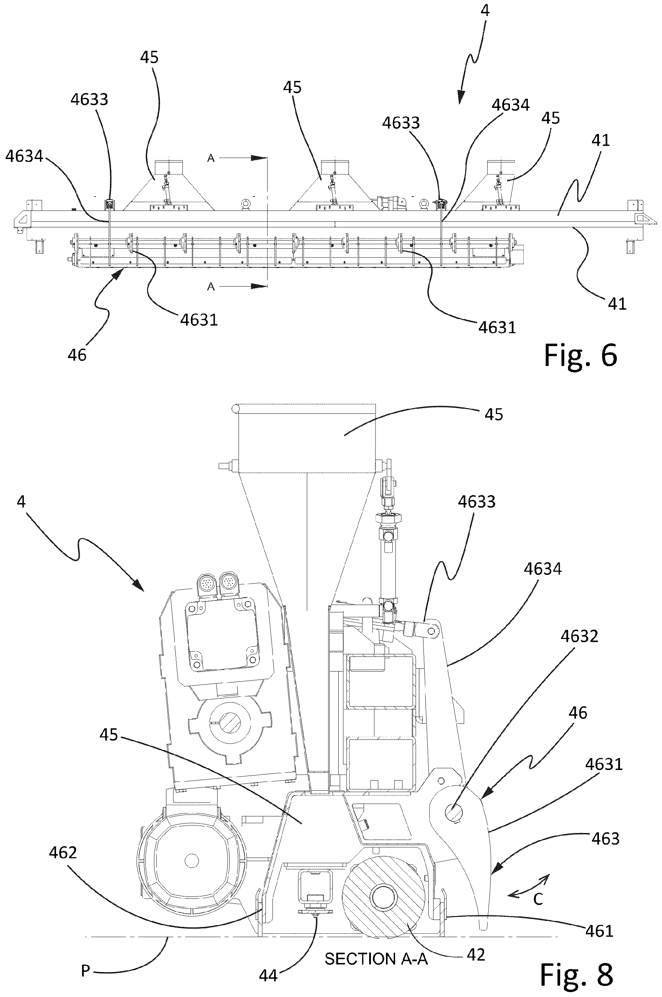

Referring to figures 4, 5, 6, 7, and 8, the cleaning unit 4 of the machining centre 1 is illustrated. The cleaning unit 4 is solidly fixed to the portal 3, as mentioned, and therefore moves together with it along the work table 2. This configuration allows for continuous cleaning of the work area during the machining operations carried out by the machining head 312.

The cleaning assembly 4 comprises a transverse frame 41, which acts as a load-bearing structure and is fixed with brackets 411 to the protective frame 32. In other words, the transverse frame 41 acts as the main structural component, supporting and connecting all other elements of the cleaning assembly 4.

The cleaning unit 4 is housed inside said housing 321 of the portal 3 and is secured with brackets. This allows the cleaning unit 4 to move together and integrally with the portal 3, ensuring constant cleaning during all machining phases.

A plurality of suction hoods 45 are installed on the transverse frame 41, each connected to a respective suction duct 452. The suction ducts 452 can be flexible, allowing for adjustable positioning of the same.

The extraction hoods 45 are designed to effectively remove residues generated during the machining operations performed by the machining unit 31.

The suction openings 451 of the suction hoods 45 are arranged facing the surface of the panel or piece P.

The suction hoods 45 are arranged above at intervals along the transverse frame 41.

Suction ducts 452 are connected to the suction hoods 45. In some embodiments, each suction duct 452 is connected to a chip collector and the like. In some embodiments, the suction ducts 452 are flexible hoses.

Below the suction hoods 45, said cleaning assembly comprises a series of nozzles 44, arranged along the transverse frame 41. The nozzles 44 can be used to direct jets of air, possibly compressed air, onto the machining waste or onto the upper surface of the panel P or piece in general.

The arrangement of the components in the cleaning assembly 4 allows for efficient removal of machining debris. The suction hoods 45 and associated suction ducts 452 provide means to collect and remove debris, while the scraper assembly 46 helps detach adhering particles or chips from the machined surface of the workpiece P.

A rotating brush 42 is positioned at the center of the transverse frame 41 of the cleaning unit 4. The brush 42 has a cylindrical shape with bristles, for sweeping or cleaning the surface of the panel P or workpiece in general. The rotating brush 42 is driven by an electric motor 43.

In some embodiments, the cleaning assembly 4 also comprises a scraper assembly 46, which comprises a first scraper 461 and a second scraper 462, made of rubber and positioned so that the brush 42 and the nozzles 44 are arranged between them.

In some embodiments, said first 461 and second 462 scrapers are adapted to detect and remove debris from the machined surface.

The scraper assembly 46 also comprises a sensing unit 463, mounted on the transverse frame 41. The scraper assembly 46 cooperates with the suction hoods 45 and other components to ensure complete cleaning of the work area.

The sensing unit 463 comprises a plurality of teeth 4631 arranged in series. The teeth 4631 are designed to detect debris or chips from the surfaces.

In particular, the detection unit 463 also comprises a rod 4632, installed on said frame 41 so that it can rotate with respect to an axis of symmetry C, the latter arranged parallel to said frame 41. The rotation axis C of the rod 4632 is therefore parallel to the Y-axis, or perpendicular to the advancement direction A of the portal 3. The teeth 4631 are fixed to the rod 4632.

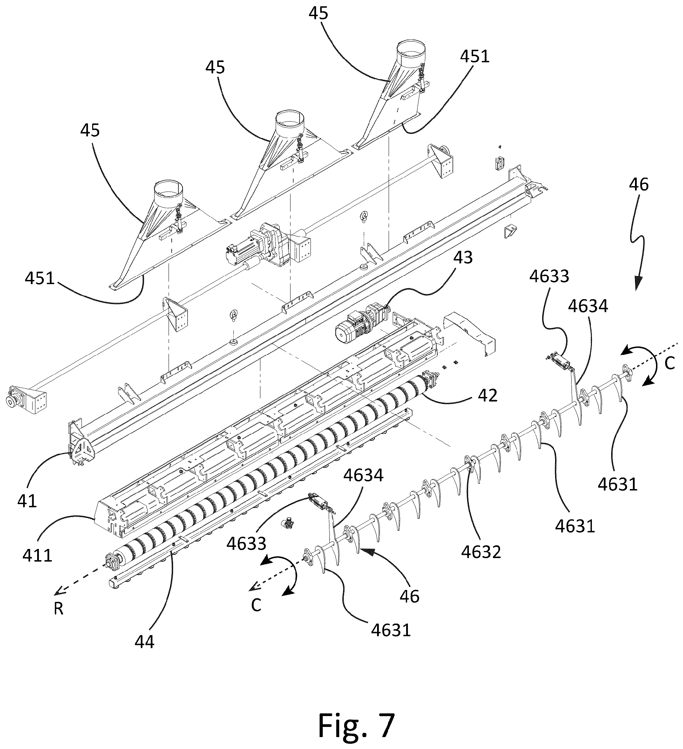

Furthermore, the sensing unit 463 also comprises at least one sensing sensor 4633 (in figure 7 there are two) and at least one connecting arm 4634 (in figure 7 there are two), which connects the rod 4632 with the sensing sensor 4633.

As the cleaning unit 4 advances with respect to the workpiece P, the teeth 4631 can intercept debris or surface chips accidentally deposited on the workpiece P. This causes the rod 4632 to rotate, so that the arm 4633 activates the detection sensors 633. In this way, surface irregularities on the workpiece P can be detected.

Following this, the control logic unit U of the machining center 1 can detect the presence of an obstacle and activate an emergency stop procedure. Specifically, the portal 3 can be stopped immediately to avoid possible damage or collisions.

The scraper 46, therefore, in addition to its primary cleaning function, also plays an important role in the safety system of the machining center 1.

The cleaning assembly 4 is designed to work in conjunction with the machining center 1, providing multiple cleaning functions, including vacuuming, air blowing, brushing and scraping to remove machining debris and keep the work area clean.

The control logic unit U can of course be implemented as an FPGA, a programmable processor. Alternatively, the control logic unit U can also be functionally integrated into the control software of the machining center 1.

The procedure or method for machining and cleaning a workpiece P used in a machining center 1 involves several steps, described below, coordinated and optimized to ensure precise treatment and effective cleaning of the workpiece P during machining, minimizing times and improving the overall quality of the finished product.

The initial step of the method involves positioning the workpiece P to be machined on the worktable 2 of the machining center 1.

This operation allows workpiece P to be placed in a stable and defined position on the worktable. Stability of workpiece P is necessary to avoid errors during machining and to allow machining head 311 to operate precisely on the desired areas. At this stage, the workpiece P can be fixed or mechanically locked onto worktable 2 to prevent undesired movements.

Subsequently, there is the movement step involving the portal 3, which moves along the worktable 2 until the machining head 312 is positioned in correspondence with the specific part of the piece P to be machined. This step ensures the correct interaction between the machining head 312 and the piece itself.

The machining execution step involves the use of the machining head 312, which comprises specific tools or instruments for the required operation on the workpiece P. During this step, the machining head comes into contact with the specific part of the workpiece P and performs operations such as cutting, milling, drilling or other machining.

The machining head 312 can be equipped with interchangeable tools and a speed and depth adjustment system, thus ensuring maximum adaptability to the type of material and the complexity of the machining operation.

Next, the cleaning unit 4, integrated with the portal 3, is activated to remove the machining waste generated. The cleaning unit 4 is designed to operate synchronized with portal 3, allowing cleaning to be performed immediately after machining, reducing residue accumulation on the workpiece and worktable. The cleaning unit 4 can comprise various tools for removing waste, as described in the following steps.

The activation of cleaning unit 4 comprises several specific sub-steps that optimize the removal of the machining waste. This step involves the activation of brush 42, which mechanically removes waste directly from the surface of the workpiece and the surrounding area. The brush 42 can be equipped with bristles of varying hardness and configuration to adapt to the material characteristics of the workpiece P, and ensure effective action without damaging the machined surface.

The next step is to emit a jet of air from one or more nozzles 44, whose purpose is to move and remove the machining waste from the work areas. Compressed air allows for contactless cleaning, ideal for removing light particles and dust, helping to keep the area clean without the need for physical contact with the workpiece P. The nozzles 44 can be oriented and adjusted in pressure, allowing for dynamic adjustment based on the quantity of waste to be removed.

The next step is to extract the scraps using an extraction hood 45 integrated into cleaning unit 4. The extraction system collects and retains the remaining scraps, ensuring they do not disperse into the work environment and keeping workpiece P and worktable 2 in optimal conditions for further machining. The hood 45 can be equipped with specific filters to retain fine particles and an air flow regulation system to adapt to the quantity and type of scraps.

Finally, the method comprises a coordination step between the movement of the portal 3 and the activation of cleaning unit 4, managed by the U control unit. This coordination allows for the effective synchronization of the various operational steps, optimizing the machining and cleaning process. The U control unit can be programmed to adjust the movements of portal 3 and the activation of cleaning unit 4 based on the specific needs of the machining operation in progress.

Furthermore, in a further step, the cleaning unit 4 can be activated during the movement of the portal 3 along the worktable 2, ensuring continuous cleaning and reducing downtime between machining operations. This feature maximizes process efficiency, as cleaning occurs in parallel with the movement of the portal, significantly reducing overall machining times and keeping the workpiece free of residues that could compromise the final quality.

### Advantages

An advantage of the present invention is that it provides a machining center with an integrated, mobile cleaning system that overcomes the limitations of fixed or manual cleaning systems. The cleaning unit, integrated into the portal, allows for effective and continuous removal of machining waste during operations, improving the quality of the final product and reducing machine downtime for manual cleaning.

Another advantage of this invention is that it combines multiple cleaning functions in a single integrated unit. The presence of a motorized brush, air jet nozzles, and extraction hoods allows for complete and thorough cleaning of the work area, adapting to different types of waste and processing conditions.

Another advantage of the present invention is the integration of an obstacle detection system into the cleaning unit. The scraper, in addition to its primary cleaning function, serves as a safety element, allowing the portal to stop immediately if obstacles are detected on the surface of the workpiece.

A further advantage of this invention is that it optimizes the machining center's operating space. By housing the cleaning unit within the portal structure, the machine's footprint is kept small while adding advanced cleaning and safety features.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machining center (1), for the machining of workpieces (P), such as panels made of wood, fiberglass, plywood, plastic, and similar materials, comprising:
a worktable (2), on which said panels (P) can be placed for machining;
a portal (3) movable with respect to said worktable (2) in an advancement direction (A) for machining the workpiece (P);
a machining unit (31) fixed to said portal (3), for machining said panels (P) placed on said worktable (2); and
a cleaning assembly (4) integrated with said portal (3), so as to be moved together with said portal (3).

2. Machining center (1) according to claim 1, **characterized**
**in that** said portal (3) comprises a housing (321), located behind said machining unit (31) in the advancement direction (A) of said portal (3), and
**in that** said cleaning assembly (4) is arranged in said housing (321).

3. Machining center (1) according to any one of the preceding claims, **characterized in that** said cleaning assembly (4) comprises:
a transverse frame (41) having a longitudinal housing (321);
a brush (42) driven by a motor (43) to remove machining scraps from the panel (P);
one or more nozzles (44) for emitting an air jet onto said machining scraps; and
at least one suction hood (45) to draw said machining scraps.

4. Machining center (1) according to any one of the preceding claims, **characterized in that** said brush (42) is configured to rotate around an axis (R), substantially parallel to said worktable (2) and transverse to said advancement direction (A).

5. Machining center (1) according to any one of the preceding claims, **characterized in that** said one or more nozzles (44) are configured to emit said air jet in a direction substantially perpendicular to said worktable (2).

6. Machining center (1) according to any one of the preceding claims, **characterized in that** said at least one suction hood (45) comprises a plurality of openings (451) arranged along a direction substantially parallel to said worktable (2).

7. Machining center (1) according to any one of the preceding claims, **characterized in that** said cleaning assembly (4) comprises one or more ducts (452), each connected to a respective suction hood (45) for collecting machining scraps.

8. Machining center (1) according to any one of the preceding claims, **characterized in that** said cleaning assembly (4) comprises a scraper assembly (46), having
a detection unit (463) installed on said transverse frame (41), wherein said detection unit (463) comprises
a rod (4632), installed on said frame (41), configured to rotate about a rotation axis (C),
a plurality of teeth (4631) arranged in series and coupled to said rod (4632), adapted to detect debris or chips on the surface of said workpiece (P),
a detection sensor (4633), and
at least one connecting arm (4634) that connects said rod (4632) with said detection sensor (4633),
wherein, when said teeth (4631) intercept debris or chips on the surface of said workpiece (P), they cause the rotation of said rod (4632) so that said arm (4634) actuates said detection sensor (4633).

9. Machining center (1) according to the preceding claim, **characterized in that** said scraper assembly (46) comprises
a first scraper (461), preferably made of rubber, and
a second scraper (462), preferably made of rubber,
wherein said first (461) and second (462) scrapers are positioned so that said brush (42) and said nozzles (44) are arranged between them.

10. Machining center (1) according to any one of the preceding claims, **characterized in that** it comprises a logical control unit (U) configured to coordinate the movement of said portal (3) with the activation of said cleaning assembly (4).

11. Machining center (1) according to the preceding claim, **characterized in that** said control unit (U) is configured to activate said cleaning assembly (4) during the movement of said portal (3).

12. Method for machining and cleaning a workpiece (P), comprising:
placing a workpiece to be machined on a worktable (2) of a machining center (1) according to any one of the preceding claims;
moving the portal (3) along the worktable (2) until positioning the machining head (31) in correspondence with a portion of the workpiece (P) to be machined;
performing the machining on the portion of the workpiece (P) using said machining head (31); and
activating the cleaning assembly (4) integrated with the portal (3) to remove the machining scraps generated.

13. Method according to the preceding claim, wherein the activation step of the cleaning assembly (4) comprises:
actuating the brush (42) to mechanically remove machining scraps;
emitting an air jet from the one or more nozzles (44) to displace machining scraps; and
aspirating the machining scraps using said at least one suction hood (45).

14. Method according to any one of claims 12 or 13, **characterized in that** it further comprises the step of:
coordinating, via a control unit (U), the movement of said portal (3) with the activation of the cleaning assembly (4).

15. Method according to any one of claims 12-14, **characterized in that** the activation step of the cleaning assembly (4) occurs during the movement of the portal (3) along the worktable (2).
